# EUROPÄISCHE PATENTSCHRIFT

(11) **EP 4 308 411 B1**
(45) Veröffentlichungstag und Bekanntmachung des Hinweises auf die Patenterteilung: **05.11.2025**
(21) Anmeldenummer: 22713932.6
(22) Anmeldetag: 11.03.2022
(51) Int. Cl.: B60N 2/07, B60N 2/42, B60N 2/68, B60R 22/26

(54) **VERSTELLEINRICHTUNG ZUR LÄNGSVERSTELLUNG EINES FAHRZEUGSITZES SOWIE ZUSATZVERRIEGELUNG FÜR SELBIGE**
ADJUSTMENT DEVICE FOR LONGITUDINAL ADJUSTMENT OF A VEHICLE SEAT, AND ADDITIONAL LOCKING FOR SAME
DISPOSITIF DE RÉGLAGE POUR LE RÉGLAGE LONGITUDINAL D'UN SIÈGE DE VÉHICULE ET VERROUILLAGE SUPPLÉMENTAIRE POUR CE DERNIER

(30) Priorität: 15.03.2021 DE 102021106279
(43) Veröffentlichungstag der Anmeldung: 24.01.2024
(73) Patentinhaber: Brose Fahrzeugteile SE & Co. Kommanditgesellschaft, Coburg, 96450 Coburg (DE)
(72) Erfinder: ULTSCH, Johannes, 96247 Michelau i. OFr. (DE)
(74) Vertreter: Maikowski & Ninnemann Patentanwälte Partnerschaft mbB
(86) Internationale Anmeldenummer: PCT/EP2022/056282
(87) Internationale Veröffentlichungsnummer: WO 2022/194683

(56) Entgegenhaltungen:
- US-A- 4 673 217
- US-A1- 2010 007 165
- US-B1- 6 352 312

## Beschreibung

### Gebiet der Erfindung

Die Erfindung betrifft allgemein eine Verstelleinrichtung zur Längsverstellung eines Fahrzeugsitzes, insbesondere eines Kraftfahrzeugsitzes, und betrifft insbesondere eine solche Verstelleinrichtung mit einer Zusatzverriegelung für einen Crashfall, eine Zusatzverriegelung für eine solche Verstelleinrichtung sowie einen Fahrzeugsitz, insbesondere Kraftfahrzeugsitz.

### Stand der Technik

Bei manuellen Längseinstellvorrichtungen von Fahrzeugsitzen ist eine Hauptverriegelung vorgesehen, die so dimensioniert ist, dass im Crashfall die Sitzschienenpaare nicht aufschälen und sich die Hauptverriegelung nicht öffnet. Aus dem Stand der Technik ist weiter eine Zusatzverriegelung für eine manuelle Sitzlängsverstellung bekannt, die eine Crashverzahnung bzw. Crashverhakung aufweist, welche als Unterstützung der manuellen Sitzlängsverstellung um eine der Verstellschienen eines Sitzschienenpaars herum angeordnet ist. Dabei ist an der Unterschiene oder einem Unterschienenanbauteil doppelseitig eine Verzahnung angebracht und an der Oberschiene oder einem Oberschienenanbauteil ein zur Verzahnung korrespondierend ausgebildete doppelseitiges Lochbild vorgesehen. In einem Normalzustand ist die Zusatzverriegelung nicht wirksam. Durch Krafteinleitung im Crashfall wird dagegen die Oberschiene nach oben angehoben und die jeweilige Verzahnung schiebt sich in das zugeordnete Lochbild. Der daraus resultierende Formschluss zwischen Lochbild und Verzahnung kann Kräfte in Fahrzeuglängsrichtung ableiten und unterstützt bzw. verstärkt die eigentliche Schienenverriegelung.

Solche Zusatzverriegelungen finden insbesondere Einsatz in Sitzsystemen mit höheren Crashbelastungen, beispielsweise bei gurtintegrierten Sitzen oder Rücksitzbänken für zwei oder mehr Fahrzeuginsassen.

Dabei kann allerdings eine "Zahn-auf-Steg-Stellung" von Zähnen der Verzahnung mit Ausnehmungen des korrespondierenden Lochbilds auftreten, was die Ausbildung des vorgenannten Formschlusses jedenfalls verzögert und behindert.

Im Falle einer elektrischen Sitzlängsverstellung kann die Längsverstellung in jeder beliebigen Verfahrposition stehen bleiben, was die Wahrscheinlichkeit des Eintretens der vorgenannten "Zahn-auf-Steg-Stellung" von Zähnen der Verzahnung mit Ausnehmungen des korrespondierenden Lochbilds weiter erhöht.

Bei manuellen Sitzlängsverstellungen hat die Hauptverriegelung der Sitzschienen üblicherweise ein Rastinkrement von kleiner gleich 10 mm. Eine Zusatzverzahnung für die vorgenannten Zusatzverriegelung kann deshalb nur bei geringen Blechdicken auf dieses Inkrement abgestimmt werden, was die Einhaltung von Sicherheitsnormen erschwert.

Zusatzverriegelungen der vorgenannten Art sind beispielsweise in DE 100 46 203 A1, DE 36 14 457 A1, US2019 299 816 A1 oder US 5 826 936 A offenbart.

### Zusammenfassung der Erfindung

Aufgabe der vorliegenden Erfindung ist es, eine Verstelleinrichtung zur Längsverstellung eines Fahrzeugsitzes mit einer effizienteren Zusatzverriegelung mit einfachem Aufbau bereitzustellen. Gemäß weiteren Gesichtspunkten der vorliegenden Erfindung sollen ferner eine entsprechende Zusatzverriegelung für eine solche Verstelleinrichtung sowie ein Fahrzeugsitz mit einer solchen Verstelleinrichtung bereitgestellt werden.

Diese Aufgaben werden durch eine Verstelleinrichtung zur Längsverstellung eines Fahrzeugsitzes mit den Merkmalen nach Anspruch 1, durch eine Zusatzverriegelung für eine solche Verstelleinrichtung mit den Merkmalen nach Anspruch 12 sowie durch einen Fahrzeugsitz mit den Merkmalen nach Anspruch 11 gelöst. Weitere vorteilhafte Ausführungsformen sind Gegenstand der rückbezogenen Unteransprüche.

Gemäß der vorliegenden Erfindung wird eine Verstelleinrichtung zur Längsverstellung eines Fahrzeugsitzes, insbesondere eines Kraftfahrzeugsitzes, bereitgestellt, mit zumindest einem Schienenpaar mit einer ersten, ortsfesten Schiene und einer zweiten Schiene, die in einer Längsrichtung relativ zu der ersten Schiene beweglich geführt ist, und einer Zusatzverriegelung, die eine Mehrzahl von ersten Verriegelungsgebilden, die an der zweiten verschieblich geführten zweiten Schiene ausgebildet oder mit dieser verbunden sind, und eine Mehrzahl von zweiten Verriegelungsgebilden aufweist, die korrespondierend zu den ersten Verriegelungsgebilden ausgebildet sind und an der ersten Schiene ausgebildet oder mit dieser verbunden sind, und wobei die Zusatzverriegelung im Normalfall unwirksam ist und nach Krafteinleitung in einem Crashfall durch Formschluss der ersten und zweiten Verriegelungsgebilde miteinander eine zusätzliche Verriegelung der zweiten Schiene mit der ersten Schiene bewirkt.

Erfindungsgemäß sind die ersten und zweiten Verriegelungsgebilde auf beiden Seiten des jeweiligen Schienenpaars und in der Längsrichtung unter regelmäßigen Abständen zueinander angeordnet, wobei die ersten Verriegelungsgebilde oder die zweiten Verriegelungsgebilde auf den beiden Seiten des jeweiligen Schienenpaars in der Längsrichtung versetzt zueinander angeordnet sind.

Wenn auf einer ersten Seite des Sitzschienenpaars in einer bestimmten Längsstellung des Fahrzeugsitzes eine "Zahn-auf-Steg"-Stellung bestehen sollte, so kann jedenfalls auf der gegenüberliegenden zweiten Seite des Sitzschienenpaars eine solche "Zahn-auf-Steg"-Stellung erfindungsgemäß nicht bestehen, sodass eine Verriegelung der Längsstellung des Sitzschienenpaars im Crashfall stets gewährleistet ist.

Damit kann auch das Gesamtinkrement, also der Abstand, unter denen die Verriegelungsgebilde auf den beiden Seiten des Sitzschienenpaars in der Längsrichtung zueinander versetzt angeordnet sind, reduziert werden, was im Umkehrschluss eine größere Breite von Zwischenstegen ermöglicht. Verstärkungen können deshalb auch mit höherer Blechdicke ausgeführt werden.

Gemäß einer weiteren Ausführungsform ersten Verriegelungsgebilde oder die zweiten Verriegelungsgebilde auf den beiden Seiten des jeweiligen Schienenpaars in der Längsrichtung jeweils unter einem vorbestimmten Inkrement beabstandet zueinander angeordnet, wobei die ersten Verriegelungsgebilde oder die zweiten Verriegelungsgebilde auf den beiden Seiten des jeweiligen Schienenpaars in der Längsrichtung unter einem ganzzahligen Bruchteil n des vorbestimmten Inkrements versetzt zueinander angeordnet sind. Mit dem ganzzahligen Bruchteil kann die Breite der Zwischenstege der Lochbilder auf den beiden Seiten des Sitzschienenpaars geeignet eingestellt werden und somit die Crash-Sicherheitseigenschaften weiter modifiziert werden.

Gemäß einer weiteren Ausführungsform gilt für den ganzzahligen Bruchteil n: n = 2, was insbesondere identische Breiten der Zwischenstege der Lochbilder auf den beiden Seiten eines Sitzschienenpaars und somit eine maximale Crashsicherheit der Längsverstelleinrichtung ermöglicht.

Gemäß einer weiteren Ausführungsform bilden die ersten Verriegelungsgebilde auf den beiden Seiten des jeweiligen Schienenpaars jeweils ein Lochbild mit einer Mehrzahl von Ausnehmungen, einer Mehrzahl von die Ausnehmungen trennenden Zwischenstegen und einem die Zwischenstege verbindenden Verbindungssteg oder jeweils eine Verzahnung mit einer Mehrzahl von Verriegelungszähnen und einer Mehrzahl von zwischen den Verriegelungszähnen angeordneten Zahnlücken aus, wobei die zweiten Verriegelungsgebilde auf den beiden Seiten des jeweiligen Schienenpaars jeweils eine Verzahnung mit einer Mehrzahl von Verriegelungszähnen und einer Mehrzahl von zwischen den Verriegelungszähnen angeordneten Zahnlücken oder jeweils ein Lochbild mit einer Mehrzahl von Ausnehmungen, einer Mehrzahl von die Ausnehmungen trennenden Zwischenstegen und einem die Zwischenstege verbindenden Verbindungssteg ausbilden.

Gemäß einer weiteren Ausführungsform sind die Längen der Ausnehmungen des jeweiligen Lochbilds in der Längsrichtung größer als die Längen der zugeordneten Verriegelungszähne der jeweiligen Verzahnung. Dadurch kann die Herstellung eines Formschluss im Crashfall weiter beschleunigt werden, weil die Verriegelungszähne rascher in die zugeordneten Ausnehmungen eines zugeordneten Lochbildes einlaufen können, um den Formschluss auszubilden.

Gemäß einer weiteren Ausführungsform ist das Lochbild jeweils als Umklammerungsabschnitt ausgebildet, welcher einen gegenüberliegenden Abschnitt mit der zugeordneten Verzahnung im Normalfall beabstandet in einer Richtung senkrecht zur Längsrichtung umklammert oder hintergreift. So kann die mechanische Festigkeit bei Zugbelastung in z-Richtung weiter erhöht werden und die Crashsicherheit durch geeignete Formgestaltung der einander gegenüberliegenden Schenkel des Schienenprofils entsprechend den Bedürfnissen eingestellt werden.

Gemäß einer weiteren Ausführungsform ist das Lochbild jeweils am vorderen Ende von Seitenschenkeln ausgebildet, welche beidseitig und korrespondierend zu einem Profil von Verbindungsschenkeln der zugeordneten Unterschiene ausgebildet sind.

Gemäß einer weiteren Ausführungsform sind die Seitenschenkel über eine Verbindungsplatte mit der zweiten, verschieblich geführten Schiene verbunden. Diese Verbindungsplatte kann zur Kopplung mit weiteren Komponenten eines Sitzschienenpaars verwendet werden.

Gemäß einer weiteren Ausführungsform sind die ersten Verriegelungsgebilde oder die zweiten Verriegelungsgebilden jeweils beidseitig eines Umklammerungsbereichs der Unterschiene mit der zugeordneten Oberschiene ausgebildet. Dadurch wird eine vorteilhaft hohe Crashsicherheit ermöglicht, weil die Umklammerungsbereiche zu beiden Seiten eines Sitzschienenpaars Bereiche mit maximaler Stabilität darstellen. Dabei sind diese Umklammerungsbereiche zweckmäßig an einander diagonal gegenüberliegenden Eckbereichen des Sitzschienenprofils vorgesehen und aufgrund der Formgebung der Schienenprofile und ihre Materialeigenschaften gegeneinander vorgespannt.

Gemäß einer weiteren Ausführungsform kann die Zusatzverriegelung alternativ auch mit einem Gurtadapter eines Sicherheitsgurtsystems verbunden sein, wobei die ersten Verriegelungsgebilde mit dem Gurtadapter verbunden sind und im Crashfall der Formschluss der ersten und zweiten Verriegelungsgebilde der Zusatzverriegelung miteinander nach Krafteinleitung in dem Sicherheitsgurtsystem bewirkt wird. Somit kann eine Zusatzverriegelung gemäß der vorliegenden Erfindung auch in Integralsitzen eingesetzt werden.

Gemäß einem weiteren Gesichtspunkt der vorliegenden Erfindung wird ein Fahrzeugsitz, insbesondere Kraftfahrzeugsitz, bereitgestellt, mit mindestens einer Verstelleinrichtung zur Längsverstellung des Fahrzeugsitzes wie vorstehend ausgeführt.

Gemäß einem weiteren Gesichtspunkt der vorliegenden Erfindung wird eine Zusatzverriegelung für eine Verstelleinrichtung zur Längsverstellung eines Fahrzeugsitzes, insbesondere eines Kraftfahrzeugsitzes, bereitgestellt, wobei die Verstelleinrichtung zumindest ein Schienenpaar mit einer ersten, ortsfesten Schiene und einer zweiten Schiene umfasst, die in einer Längsrichtung relativ zu der ersten Schiene beweglich geführt ist, wobei die Zusatzverriegelung eine Mehrzahl von Verriegelungsgebilden aufweist, die in der Längsrichtung unter regelmäßigen Abständen zueinander angeordnet sind.

Erfindungsgemäß sind die Verriegelungsgebilde ausgelegt, um auf beiden Seiten des jeweiligen Schienenpaars angeordnet zu sein, wobei die Verriegelungsgebilde auf den beiden einander gegenüberliegenden Seiten in der Längsrichtung versetzt zueinander angeordnet sind, wie vorstehend ausgeführt.

### Figurenübersicht

Nachfolgend wird die Erfindung in beispielhafter Weise und unter Bezugnahme auf die beigefügten Figuren beschrieben. Es zeigen:
- Fig. 1: in einer schematischen Ansicht einen Kraftfahrzeugsitz mit einer Verstelleinrichtung zur Längsverstellung und einer Zusatzverriegelung gemäß der vorliegenden Erfindung;
- Fig. 2a und 2b: in einer perspektivischen Draufsicht die Unterschiene einer Verstelleinrichtung zur Längsverstellung eines Kraftfahrzeugsitzes mit einer Zusatzverriegelung gemäß der vorliegenden Erfindung;
- Fig. 3a und 3b: in einer Unteransicht die Unterschiene einer Verstelleinrichtung zur Längsverstellung eines Kraftfahrzeugsitzes mit einer Zusatzverriegelung gemäß den Figuren 2a und 2b; und
- Fig. 4: in einer Unteransicht die Unterschiene einer Verstelleinrichtung zur Längsverstellung gemäß einer weiteren Ausführungsform ohne Darstellung der Zusatzverriegelung.

In den Figuren bezeichnen identische Bezugszeichen identische oder im Wesentlichen gleichwirkende Elemente oder Elementgruppen.

### Ausführliche Beschreibung

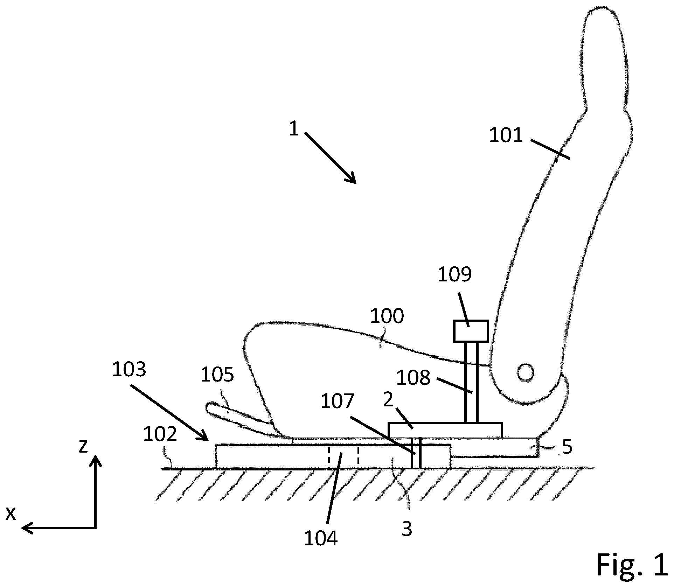

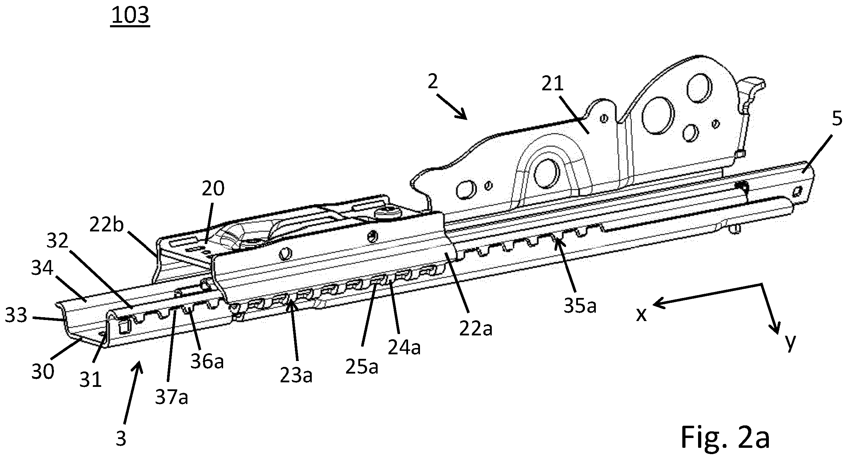

Die Fig. 1 zeigt in einer schematischen Ansicht einen Kraftfahrzeugsitz 1 mit einer Verstelleinrichtung 103 zur Längsverstellung und einer Zusatzverriegelung gemäß der vorliegenden Erfindung. In der nachfolgenden Beschreibung wird die folgende Bezeichnungsweise zur Definition der Raumrichtungen verwendet: eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung (y; vgl. Fig. 2a) ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse. Positions- und Richtungsangaben, wie beispielsweise vorne, hinten, oben und unten, beziehen sich auf eine Blickrichtung eines im Fahrzeugsitz sitzenden Insassen in normaler Sitzposition, wobei der Fahrzeugsitz 1 im Fahrzeug eingebaut, in einer zur Personenbeförderung geeigneten Gebrauchsposition mit aufrechtstehender Rückenlehne 101 und wie üblich in Fahrtrichtung ausgerichtet ist.

Der in Fig. 1 gezeigte Fahrzeugsitz 1 für ein Kraftfahrzeug weist ein Sitzteil 100 und eine relativ zum Sitzteil 100 in ihrer Neigung einstellbare Lehne 101 auf. Der Fahrzeugsitz 1 ist zur Einstellung einer Sitzlängsposition auf einer Längsverstelleinrichtung 103 montiert, die zumindest ein Schienenpaar aufweist, mit einer ersten Sitzschiene 5 (nachfolgend als Oberschiene bezeichnet), insbesondere zur Verbindung mit einem Sitzrahmenseitenteil, und einer zweiten Sitzschiene 3 (nachfolgend als Unterschiene bezeichnet), die insbesondere ortsfest mit einer Fahrzeugstruktur, beispielsweise einem Fahrzeugboden 102, verbunden ist. Die Sitzschienen 3, 5 des Sitzschienenpaares sind in Längsrichtung x relativ zueinander verschiebbar.

Im Falle einer manuellen Längsverstelleinrichtung 103 ist eine Hauptverriegelung 104 zur Sicherung der Längsstellung des Fahrzeugsitzes 1 vorgesehen, die durch einen Bedienhebel 105 betätigt werden kann. Zur zusätzlichen Verriegelung der Oberschiene 5 mit der Unterschiene 3 ist eine Zusatzverriegelung 107 vorgesehen. Im Normalfall ist die Zusatzverriegelung 107 unwirksam, sodass die Längsstellung des Fahrzeugsitzes 1 mittels der Längsverstelleinrichtung 103 ungehindert verstellt werden kann. Durch Krafteinleitung im Crashfall wird die Oberschiene 5 relativ zu der Unterschiene 3 nach oben (in z-Richtung) gezogen, insbesondere im hinteren Bereich der Oberschiene 5. Die Relativbewegung durch Krafteinleitung im Crashfall bewirkt eine zusätzliche Verriegelung der Oberschiene 5 mit der Unterschiene 3 durch Formschluss von Verriegelungsgebilden der Zusatzverriegelung 107 miteinander, wie nachfolgend weiter ausgeführt.

Im Falle einer manuellen Längsverstelleinrichtung 103 kann der Fall auftreten, dass kurz vor einem Crash der Sitzbenutzer zufällig die Hauptverriegelung 104 gelöst hat, um den Fahrzeugsitz zu verstellen. Im Crashfall wird der Fahrzeugsitz dann beschleunigt und selbst nach Loslassen des Verriegelungshebels kann die Hauptverriegelung 104 aufgrund der hohen Relativgeschwindigkeit nicht mehr rasch genug wiederhergestellt werden. Die Zusatzverriegelung 107 gewährleistet eine zuverlässige Verrieglung der der Oberschiene 5 mit der Unterschiene 3.

Bei dem Fahrzeugsitz 1 kann es sich auch um einen Integralsitz handeln, der mit einem Gurtadapter 2 versehen ist, wobei ein Gurtschloss 109 eines Sicherheitsgurtsystems über ein Verbindungsteil 108 mit dem Gurtadapter 2 verbunden ist, der an der Oberschiene 5 ausgebildet oder mit dieser verbunden ist. Im Crashfall entsteht durch eine Relativbewegung zwischen Sitzbenutzer und Fahrzeugsitz 1 ein Zug im Sicherheitsgurt, welcher das Gurtschloss 109 relativ zur Oberschiene 5 nach oben (in z-Richtung) zieht, was eine zusätzliche Verriegelung der Oberschiene 5 mit der Unterschiene 3 durch Formschluss von Verriegelungsgebilden der Zusatzverriegelung 107 miteinander bewirkt, wie nachfolgend weiter ausgeführt.

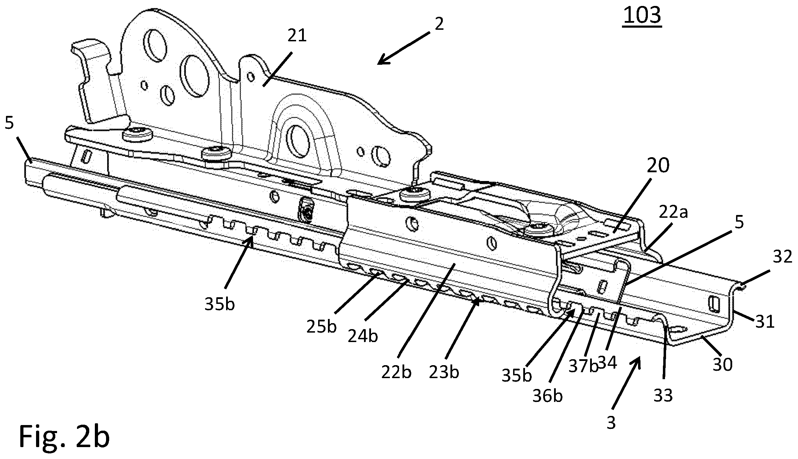

Die Figuren 2a und 2b zeigen beispielhaft ein Profil einer Unterschiene 3, mit einem horizontal ausgerichteten Boden 3 zur Verbindung mit einer ortsfesten Fahrzeugstruktur, zwei seitlich und schräg davon aufwärts abragenden Verbindungsschenkeln 31, 33 und zwei abgebogenen seitlichen Schenkeln 32, 34, die korrespondierend dazu ausgebildete seitliche Schenkel der Oberschiene 5 in der bekannten Weise in Umklammerungsabschnitten umklammern, um ein Aufschälen des Sitzschienenpaars zu verhindern.

An dem ersten seitlich abgebogenen Schenkel 32 ist eine erste Zusatzverzahnung 35a ausgebildet, die eine Mehrzahl von ersten Verriegelungszähnen 36a, die in der Längsrichtung x unter regelmäßigen Abständen (nachfolgend als Inkrement a bezeichnet) beabstandet zueinander angeordnet sind, wobei zwischen jeweils zwei aufeinanderfolgenden ersten Verriegelungszähnen 36a eine Zahnlücke 37a ausgebildet ist. An dem gegenüberliegenden zweiten seitlich abgebogenen Schenkel 34 ist eine zweite Zusatzverzahnung 35b ausgebildet, die eine Mehrzahl von zweiten Verriegelungszähnen 36b, die in der Längsrichtung x unter den gleichen regelmäßigen Abständen (a) beabstandet zueinander angeordnet sind, wobei zwischen jeweils zwei aufeinanderfolgenden zweiten Verriegelungszähnen 36b eine Zahnlücke 37b ausgebildet ist.

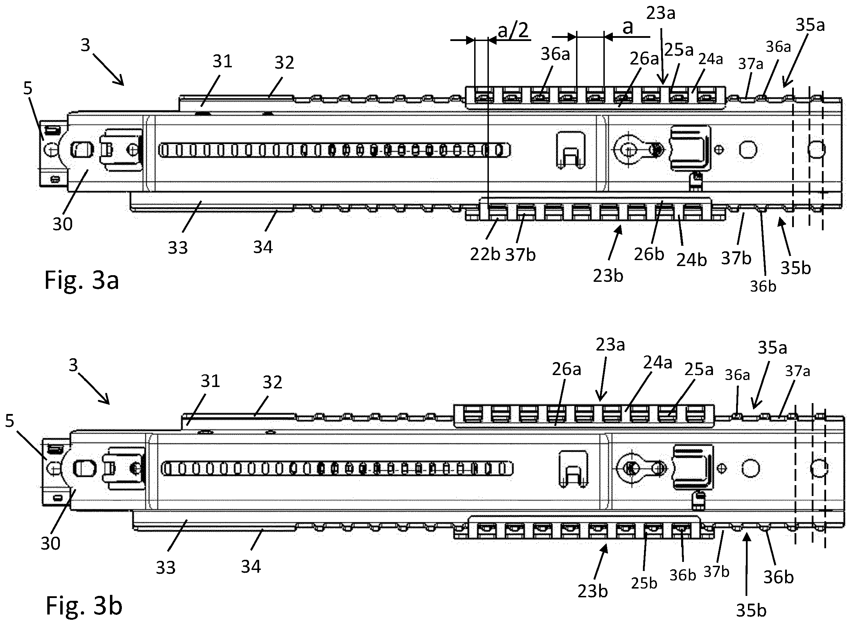

Weiter ist ein Adapter 2 mit einem aufrechten Verbindungssteg 21 und einer oberen Verbindungsplatte 20 vorgesehen, der an der Oberschiene 5 ausgebildet sein kann oder mit dieser gekoppelt oder verbunden ist. Dabei sind die seitlichen Schenkel des Schienenpaars von Ober- und Unterschiene 5, 3 von korrespondierend dazu ausgebildeten Seitenschenkeln 22a, 22b umklammert, die mit der oberen Verbindungsplatte 20 verbunden sind. An den vorderen Enden der Seitenschenkel 22a, 22b ist jeweils ein Lochbild 23a, 23b korrespondierend zu der zugeordneten Zusatzverzahnung 35a, 35b ausgebildet. Wie man den Figuren 3a und 3b entnehmen kann, umfasst ein jeweiliges Lochbild 23a, 23b eine Mehrzahl von Ausnehmungen 24a, 24b, eine Mehrzahl von Zwischenstegen 24a, 24b, welche die zugeordneten Ausnehmungen 24a, 24b voneinander trennend. Die vorderen Enden der Zwischenstege 24a, 24b sind über einen Verbindungssteg 26a, 26b miteinander verbunden.

Im Normalzustand ist die so ausgebildete Zusatzverriegelung unwirksam, d.h. die Lochbilder 23a, 23b und zugeordneten Zusatzverzahnungen 35a, 35b befinden sich nicht in einem wechselseitigen Eingriff, sodass die Oberschiene 5 im Falle einer mechanischen Längsverstelleinrichtung nach Lösen der Hauptverriegelung zum Einstellen der Sitzlängsstellung relativ zu der Unterschiene 3 frei verschoben werden kann oder im Falle einer elektrischen Sitzlängsverstellung durch Betätigen eines Elektromotors relativ zu der Unterschiene 3 verschoben werden kann.

Im Crashfall wird durch eine Relativbewegung zwischen Sitzbenutzer und Fahrzeugsitz eine in z-Richtung wirkende Zugkraft in das System eingeleitet, was durch Anheben der Oberschiene 5 relativ zu der Unterschiene einen formschlüssigen Eingriff der Zusatzverzahnung 35a, 35b in das zugeordnete Lochbild 23a, 23b und somit eine zusätzliche Verriegelung der Oberschiene 5 mit der Unterschiene 3 bewirkt.

Wie man der den Figuren 3a und 3b entnehmen kann, sind die Verriegelungszähne 36a auf einer ersten Seite der Unterschiene 3 relativ zu den Verriegelungszähnen 36b auf der gegenüberliegenden zweiten Seite der Unterschiene 3 in der Längsrichtung x nicht versetzt zueinander angeordnet, also in der y-Richtung fluchtend angeordnet, wie durch die gestrichelten Linien im rechten Bildteil angedeutet.

Wie man den Figuren 3a und 3b weiter entnehmen kann, sind die beiden Lochbilder 23a, 23b auf den beiden Seiten des Sitzschienenpaars erfindungsgemäß in der Längsrichtung x versetzt zueinander angeordnet, also in y-Richtung nicht-fluchtend angeordnet. Der Versatz entspricht in dem dargestellten Ausführungsbeispiel einem halben Inkrement a, unter dem die Ausnehmungen 25a, 25b in der Längsrichtung (x) beabstandet zueinander angeordnet sind. Dadurch wird erfindungsgemäß sichergestellt, dass im Crashfall, wenn in einer bestimmten Längsstellung auf einer Seite des Sitzschienenpaars eine "Zahn-auf-Steg-Stellung" besteht, beispielsweise im Fall der Fig. 3a der zweiten Verriegelungszähne 36b der zweiten Zusatzverzahnung 35b mit den Ausnehmungen 25b des zugeordneten zweiten Lochbilds 23b auf der zweiten Seite des Sitzschienenpaars, auf der gegenüberliegenden ersten Seite des Sitzschienenpaars keine solche "Zahn-auf-Steg-Stellung" besteht, also dann die ersten Verriegelungszähne 36a der erstem Zusatzverzahnung 35a ohne weiteres in die Ausnehmungen 25a des zugeordneten ersten Lochbilds 23a auf der gegenüberliegenden ersten Seite des Sitzschienenpaars gleiten und in diese formschlüssig eingreifen können.

Eine Zusatzverriegelung gemäß der vorliegenden Erfindung kann somit rascher und zuverlässiger ausgelöst werden, denn eine behindernde "Zahn-auf-Steg-Stellung" ist erfindungsgemäß in jeder beliebigen Längsstellung des Sitzschienenpaars zumindest auf einer Seite verhindert.

Dabei entspricht der Versatz in der Längsrichtung (x) zweckmäßig einem ganzzahligen Bruchteil (n) des Inkrements a, unter dem die Verriegelungszähne 36a, 36b auf den beiden Seiten der Unterschiene 3 in der Längsrichtung x beabstandet zueinander angeordnet sind. Bevorzugt gilt für diesen ganzzahligen Bruchteil (n): n = 2. Die Verriegelungszähne 36a, 36b und dazwischen ausgebildeten Zahnlücken 37a, 37b müssen dabei in der Längsrichtung x nicht unbedingt die gleiche Länge aufweisen. Auch können die Verriegelungszähne 36a, 36b und die dazwischen ausgebildeten Zahnlücken 37a, 37b auf den beiden Seiten der Unterschiene jeweils unterschiedliche Längen aufweisen, wobei das Inkrement a auf beiden Seiten der Unterschiene 3 bevorzugt identisch ist. Wie man den Figuren 3a und 3b entnehmen kann, sind beispielsweise die Verriegelungszähne 36a auf der ersten Seite der Unterschiene 3 etwas kürzer ausgebildet als die Verriegelungszähne 36b auf der gegenüberliegenden zweiten Seite der Unterschiene 3, was entsprechend umgekehrt für die Zahnlücken 37b auf der zweiten Seite der Unterschiene 3 und die Zahnlücken 37a auf der gegenüberliegenden ersten Seite der Unterschiene 3 gilt. Wie man den Figuren 3a und 3b weiter entnehmen kann, sind die vorderen und hinteren Flanken der Verriegelungszähne 36a, 36b abgeschrägt ausgebildet, um ein besseres Hineingleiten der Verriegelungszähne 36a, 36b in die Ausnehmungen 25a, 5b des zugeordneten Lochbilds 23a, 23b im Crashfall zu ermöglichen. Durch diese unterschiedliche Ausgestaltung der Zusatzverzahnungen 35a, 35b auf den beiden Seiten des Sitzschienenpaars kann die Zusatzverriegelung gemäß der vorliegenden Erfindung noch rascher und zuverlässiger ausgelöst werden.

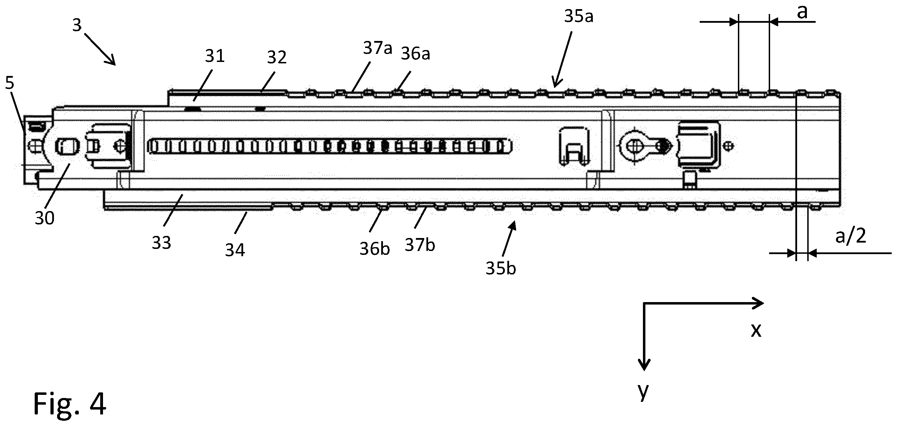

Wie dem Fachmann ohne weiteres ersichtlich sein wird, können anstelle des vorgenannten Versatzes der Lochbilder entsprechend auch die Zusatzverzahnungen auf den beiden Seiten des Sitzschienenpaars in der x-Richtung relativ zueinander versetzt angeordnet sein, also in der y-Richtung nicht-fluchtend angeordnet. Ein Beispiel für eine entsprechend diesem Fall ausgebildete Unterschiene 3 ist in der Fig. 4 in einer Unteransicht abgebildet. Bei dieser Ausführungsform sind die zugeordneten Lochbilder (in der Fig. 4 nicht dargestellt) entsprechend in der x-Richtung nicht relativ zueinander versetzt angeordnet, also in der y-Richtung fluchtend angeordnet.

Während vorstehend der Fall zugrunde gelegt wurde, dass die Lochbilder 23a, 23b an den beiden das Sitzschienenpaar umgreifenden Seitenschenkeln 22a, 22b vorgesehen sind und die Zusatzverzahnungen 35a, 35b an der Unterschiene ausgebildet sind, können in entsprechender Weise die Lochbilder auch an der Unterschiene ausgebildet sein und können die Zusatzverzahnungen in entsprechender Weise auch an den beiden das Sitzschienenpaar umgreifenden Seitenschenkeln vorgesehen sein, also die Rolle von oberschienenfesten und unterschienenfesten Bauteilen vertauscht sein.

Allgemein ermöglicht eine Zusatzverriegelung gemäß der vorliegenden Erfindung immer dann ein erhöhtes Maß an Sicherheit im Crashfall, wenn mit einer Längsverstelleinrichtung Fahrzeugsitze mit relativ hohem Gewicht verstellt werden sollen. Dies kann beispielsweise bei Fahrzeugsitzen der Fall sein, die mit zahlreichen Zusatz-Komfortmerkmalen ausgestattet sind, was mit dem Einbau von zahlreichen, relativ schweren Elektromotoren und Aktuatoren einhergeht. Eine weiteres Anwendungsgebiet sind aufgrund ihres sehr hohen Gewichts Rücksitzbänke von Kraftfahrzeugen, insbesondere mehrsitzige Rücksitzbänke, deren Stellung in Fahrzeuglängsrichtung mit Hilfe von zumindest einem Sitzschienenpaar verstellt werden kann.

### Liste der Bezugszeichen

- 1: Fahrzeugsitz
- 2: Adapter

- 3: Unterschiene

- 5: Oberschiene

- 20: obere Verbindungsplatte
- 21: Verbindungssteg
- 22a: erster Seitenschenkel
- 22b: zweiter Seitenschenkel
- 23a: erstes Lochbild
- 23b: zweites Lochbild
- 24a: Zwischensteg von erstem Lochbild
- 24b: Zwischensteg von zweitem Lochbild
- 25a: Ausnehmung von erstem Lochbild
- 25b: Ausnehmung von zweitem Lochbild
- 26a: erster Verbindungssteg
- 26b: zweiter Verbindungssteg

- 30: Boden von Unterschiene
- 31: erster aufwärts ragende Verbindungsschenkel
- 32: erster abgebogene Schenkel
- 33: zweiter aufwärts ragende Verbindungsschenkel
- 34: zweiter abgebogene Schenkel

- 35a: erste Zusatzverzahnung
- 35b: zweite Zusatzverzahnung
- 36a: Verriegelungszahn von erster Zusatzverzahnung
- 36b: Verriegelungszahn von zweiter Zusatzverzahnung
- 37a: Zahnlücke von erster Zusatzverzahnung
- 37b: Zahnlücke von zweiter Zusatzverzahnung
- 100: Sitzteil
- 101: Rückenlehne
- 102: Fahrzeugboden
- 103: Längsverstelleinrichtung
- 104: Hauptverriegelung
- 105: Bedienhebel

- 107: Zusatzverriegelung
- 108: Verbindungsteil
- 109: Gurtschloss

- x: Fahrzeuglängsrichtung
- y: Fahrzeugquerrichtung
- z: vertikale Richtung

- a: Inkrement von Verriegelungsgebilden

## Patentansprüche

1. Verstelleinrichtung (103) zur Längsverstellung eines Fahrzeugsitzes, umfassend:
zumindest ein Schienenpaar mit einer ersten, ortsfesten Schiene (3) und einer zweiten Schiene (5), die in einer Längsrichtung (x) relativ zu der ersten Schiene beweglich geführt ist; und
eine Zusatzverriegelung (107); wobei
die Zusatzverriegelung eine Mehrzahl von ersten Verriegelungsgebilden (24, 25), die an der zweiten Schiene (5) ausgebildet oder mit dieser verbunden sind, und eine Mehrzahl von zweiten Verriegelungsgebilden (36, 37) aufweist, die korrespondierend zu den ersten Verriegelungsgebilden ausgebildet sind und an der ersten Schiene (3) ausgebildet oder mit dieser verbunden sind, und
die Zusatzverriegelung im Normalfall unwirksam ist und nach Krafteinleitung in einem Crashfall durch Formschluss der ersten und zweiten Verriegelungsgebilde (24, 25; 36, 37) miteinander eine zusätzliche Verriegelung der zweiten Schiene (5) mit der ersten Schiene (3) bewirkt,
wobei die ersten und zweiten Verriegelungsgebilde (24, 25; 36, 37) auf beiden Seiten des jeweiligen Schienenpaars und in der Längsrichtung (x) unter regelmäßigen Abständen (a) zueinander angeordnet sind, **dadurch gekennzeichnet, dass**
die ersten Verriegelungsgebilde (24a, 25a; 24b, 25b) oder die zweiten Verriegelungsgebilde (36a, 37b; 36b, 37b) auf den beiden Seiten des jeweiligen Schienenpaars in der Längsrichtung (x) versetzt zueinander angeordnet sind.

2. Verstelleinrichtung nach Anspruch 1, wobei
die ersten Verriegelungsgebilde (24a, 25a; 24b, 25b) oder die zweiten Verriegelungsgebilde (36a, 37b; 36b, 37b) auf den beiden Seiten des jeweiligen Schienenpaars in der Längsrichtung (x) jeweils unter einem vorbestimmten Inkrement (a) beabstandet zueinander angeordnet sind, und
die ersten Verriegelungsgebilde (24a, 25a; 24b, 25b) oder die zweiten Verriegelungsgebilde (36a, 37b; 36b, 37b) auf den beiden Seiten des jeweiligen Schienenpaars in der Längsrichtung (x) unter einem ganzzahligen Bruchteil n des vorbestimmten Inkrements (a) versetzt zueinander angeordnet sind.

3. Verstelleinrichtung nach Anspruch 2, wobei für den ganzzahligen Bruchteil n gilt:
n = 2.

4. Verstelleinrichtung nach einem der vorhergehenden Ansprüche, wobei
die ersten Verriegelungsgebilde auf den beiden Seiten des jeweiligen Schienenpaars jeweils ein Lochbild (23) mit einer Mehrzahl von Ausnehmungen (24), einer Mehrzahl von die Ausnehmungen trennenden Zwischenstegen (24) und einem die Zwischenstege (24) verbindenden Verbindungssteg (26) oder eine Verzahnung (35) mit einer Mehrzahl von Verriegelungszähnen (36) und einer Mehrzahl von zwischen den Verriegelungszähnen (36) angeordneten Zahnlücken (37) ausbilden und wobei
die zweiten Verriegelungsgebilde auf den beiden Seiten des jeweiligen Schienenpaars jeweils eine Verzahnung (35) mit einer Mehrzahl von Verriegelungszähnen (36) und einer Mehrzahl von zwischen den Verriegelungszähnen (36) angeordneten Zahnlücken (37) oder ein Lochbild (23) mit einer Mehrzahl von Ausnehmungen (24), einer Mehrzahl von die Ausnehmungen trennenden Zwischenstegen (24) und einem die Zwischenstege (24) verbindenden Verbindungssteg (26) ausbilden.

5. Verstelleinrichtung nach Anspruch 4, wobei die Längen der Ausnehmungen (24) des jeweiligen Lochbilds (23) in der Längsrichtung (x) größer sind als die Längen der zugeordneten Verriegelungszähne (36) der jeweiligen Verzahnung (35).

6. Verstelleinrichtung nach Anspruch 4 oder 5, wobei das Lochbild (23) jeweils als Umklammerungsabschnitt ausgebildet ist, welcher einen gegenüberliegenden Abschnitt mit der zugeordneten Verzahnung (35) im Normalfall beabstandet in einer Richtung senkrecht zur Längsrichtung (x) umklammert oder hintergreift.

7. Verstelleinrichtung nach Anspruch 6, wobei das Lochbild (23) jeweils am vorderen Ende von Seitenschenkeln (22) ausgebildet ist, welche beidseitig und korrespondierend zu einem Profil von Verbindungsschenkeln (31, 33) der zugeordneten Unterschiene (3) ausgebildet sind.

8. Verstelleinrichtung nach Anspruch 7, wobei die Seitenschenkel (22) über eine Verbindungsplatte (20) mit der zweiten Schiene (5) verbunden sind.

9. Verstelleinrichtung nach einem der vorhergehenden Ansprüche, wobei die ersten Verriegelungsgebilde (24a, 25a; 24b, 25b) oder die zweiten Verriegelungsgebilden (36, 37) jeweils beidseitig eines Umklammerungsbereichs (34) der Unterschiene (3) mit der zugeordneten Oberschiene (5) ausgebildet sind.

10. Verstelleinrichtung nach einem der vorhergehenden Ansprüche, wobei die Zusatzverriegelung (107) mit einem Gurtadapter (2) eines Sicherheitsgurtsystems verbunden ist, wobei die ersten Verriegelungsgebilde (24, 25) mit dem Gurtadapter (2) verbunden sind und im Crashfall der Formschluss der ersten und zweiten Verriegelungsgebilde (24, 25; 36, 37) der Zusatzverriegelung miteinander nach Krafteinleitung in dem Sicherheitsgurtsystem bewirkt wird.

11. Fahrzeugsitz, insbesondere Kraftfahrzeugsitz, mit mindestens einer Verstelleinrichtung (103) zur Längsverstellung des Fahrzeugsitzes nach einem der vorhergehenden Ansprüche.

12. Zusatzverriegelung (107) für eine Verstelleinrichtung (103) zur Längsverstellung eines Fahrzeugsitzes in einer Längsrichtung (x); umfassend
eine Mehrzahl von Verriegelungsgebilden (24, 25; 36, 37), die in der Längsrichtung (x) unter regelmäßigen Abständen (a) zueinander angeordnet sind und die an zwei einander gegenüberliegenden Seitenschenkeln (22a, 22b) ausgebildet sind, die sich in der Längsrichtung (x) erstrecken,
**dadurch gekennzeichnet, dass**
die Verriegelungsgebilde (24, 25; 36, 37) auf den beiden einander gegenüberliegenden Seiten in der Längsrichtung (x) versetzt zueinander angeordnet sind.

## Claims

1. An adjustment device (103) for adjustment of the position of a vehicle seat in a longitudinal direction, comprising:
at least one pair of rails comprising a first, fixed rail (3) and a second rail (5) movably guided in the longitudinal direction (x) relative to the first rail; and
an ancillary locking device (107); wherein
the ancillary locking device comprises a plurality of first locking structures (24, 25) formed on or connected to the second rail (5), and a plurality of second locking structures (36, 37) formed corresponding to the first locking structures and formed on or connected to the first rail (3), and
the ancillary locking device is not active in a normal mode and, after introduction of forces in the event of a crash, causes an additional locking of the second rail (5) to the first rail (3) by positively locking of the first and second locking structures (24, 25; 36, 37) to one another,
wherein the first and second locking structures (24, 25; 36, 37) are arranged on both sides of the respective pair of rails and at regular distances (a) from each other in the longitudinal direction (x), wherein
**characterized in that** the first locking structures (24a, 25a; 24b, 25b) or the second locking structures (36a, 37b; 36b, 37b) are arranged offset with respect to one other in the longitudinal direction (x) on the two sides of the respective pair of rails.

2. The adjustment device as claimed in claim 1, wherein
the first locking structures (24a, 25a; 24b, 25b) or the second locking structures (36a, 37b; 36b, 37b) are each arranged spaced apart from each other in the longitudinal direction (x) by a predetermined increment (a) on the two sides of the respective pair of rails, and
the first locking structures (24a, 25a; 24b, 25b) or the second locking structures (36a, 37b; 36b, 37b) are each arranged offset from each other in the longitudinal direction (x) by an integer fraction n of the predetermined increment (a) on the two sides of the respective pair of rails.

3. The adjustment device as claimed in claim 2, wherein the following applies to the integer fraction n: n = 2.

4. The adjustment device as claimed in any of the preceding claims, wherein
the first locking structures on the two sides of the respective pair of rails each form a hole pattern (23) comprising a plurality of recesses (24), a plurality of intermediate webs (24) separating the recesses and a connecting web (26) connecting the intermediate webs (24), or a toothing (35) comprising a plurality of locking teeth (36) and a plurality of tooth gaps (37) arranged between the locking teeth (36), and wherein
the second locking structures each form, on the two sides of the respective pair of rails, a toothing (35) comprising a plurality of locking teeth (36) and a plurality of tooth gaps (37) arranged between the locking teeth (36), or a hole pattern (23) comprising a plurality of recesses (24), a plurality of intermediate webs (24) separating the recesses, and a connecting web (26) connecting the intermediate webs (24).

5. The adjustment device as claimed in claim 4, wherein the lengths of the recesses (24) of the respective hole pattern (23) in the longitudinal direction (x) are greater than the lengths of the associated locking teeth (36) of the respective toothing (35).

6. The adjustment device as claimed in claim 4 or 5, wherein the hole pattern (23) is formed in each case as an embracing section which, in a normal mode, embraces or grips behind an opposite section with the associated toothing (35) spaced apart in a direction perpendicular to the longitudinal direction (x).

7. The adjustment device as claimed in claim 6, wherein the hole pattern (23) is formed respectively at the front end of lateral legs (22), which are formed on both sides and corresponding to a profile of connecting legs (31, 33) of the associated bottom rail (3).

8. The adjustment device as claimed in claim 7, wherein the lateral legs (22) are connected to the second rail (5) via a connecting plate (20).

9. The adjustment device as claimed in any of the preceding claims, wherein the first locking structures (24a, 25a; 24b, 25b) or the second locking structures (36, 37) are each formed on both sides of an embracing section (34) of the bottom rail (3) with the associated upper rail (5).

10. The adjustment device as claimed in any of the preceding claims, wherein the ancillary locking device (107) is connected to a belt adapter (2) of a safety belt system, wherein the first locking structures (24, 25) are connected to the belt adapter (2) and, in the event of a crash, the positive locking of the first and second locking structures (24, 25; 36, 37) of the ancillary locking device to one another is effected after the introduction of a force in the safety belt system.

11. A vehicle seat, in particular a motor vehicle seat, comprising at least one adjustment device (103) for adjustment of the position of the vehicle seat in a longitudinal direction as claimed in any of the preceding claims.

12. An ancillary locking device (107) for an adjustment device (103) for adjustment of the position of a vehicle seat in a longitudinal direction; comprising
a plurality of locking structures (24, 25; 36, 37) arranged at regular distances (a) from each other in the longitudinal direction (x) and formed on two opposite lateral legs (22a, 22b) extending in the longitudinal direction (x),
**characterized in that**
the locking structures (24, 25; 36, 37) are arranged on the two opposite sides offset from each other in the longitudinal direction (x).

## Revendications

1. Dispositif de réglage (103) pour le réglage longitudinal d'un siège de véhicule, comprenant :
au moins une paire de rails comprenant un premier rail stationnaire (3) et un deuxième rail (5) qui est guidé de manière mobile dans une direction longitudinale (x) par rapport au premier rail ; et
un verrouillage supplémentaire (107) ; dans lequel
le verrouillage supplémentaire comprend une pluralité de premières formations de verrouillage (24, 25), qui sont formées sur le deuxième rail (5) ou reliées à celui-ci, et une pluralité de deuxièmes formations de verrouillage (36, 37), qui sont formées en correspondance avec les premières formations de verrouillage et sont formées sur le premier rail (3) ou reliées à celui-ci, et
le verrouillage supplémentaire est inefficace dans le cas normal et, après l'application d'une force dans un cas de collision, provoque un verrouillage supplémentaire du deuxième rail (5) avec le premier rail (3) par une complémentarité de formes entre les première et deuxième formations de verrouillage (24, 25 ; 36, 37),
dans lequel les première et deuxième formations de verrouillage (24, 25 ; 36, 37) sont agencées sur les deux côtés de la paire de rails respective et à des distances régulières (a) l'une de l'autre dans la direction longitudinale (x),
**caractérisé en ce que** les premières formations de verrouillage (24a, 25a ; 24b, 25b) ou les deuxièmes formations de verrouillage (36a, 37b ; 36b, 37b) sont agencées sur les deux côtés de la paire de rails respective de manière décalée l'une par rapport à l'autre dans la direction longitudinale (x).

2. Dispositif de réglage selon la revendication 1, dans lequel
les premières formations de verrouillage (24a, 25a ; 24b, 25b) ou les deuxièmes formations de verrouillage (36a, 37b ; 36b, 37b) sont agencées sur les deux côtés de la paire de rails respective dans la direction longitudinale (x) chacun à un incrément prédéterminé (a) espacés les uns des autres, et
les premières formations de verrouillage (24a, 25a ; 24b, 25b) ou les deuxièmes formations de verrouillage (36a, 37b ; 36b, 37b) sont agencées sur les deux côtés de la paire de rails respective dans la direction longitudinale (x) en étant décalées les unes par rapport aux autres d'une fraction entière n de l'incrément prédéterminé (a).

3. Dispositif de réglage selon la revendication 2, dans lequel, pour la fraction entière n, on a : n = 2.

4. Dispositif de réglage selon l'une quelconque des revendications précédentes, dans lequel
les premières formations de verrouillage forment sur les deux côtés de la paire de rails respective respectivement une configuration de trous (23) avec une pluralité d'évidements (24), une pluralité d'entretoises intermédiaires (24) séparant les évidements et une entretoise de liaison (26) reliant les entretoises intermédiaires (24) ou une denture (35) avec une pluralité de dents de verrouillage (36) et une pluralité d'entredents (37) agencés entre les dents de verrouillage (36), et dans lequel
les deuxièmes formations de verrouillage forment sur les deux côtés de la paire de rails respective respectivement une denture (35) avec une pluralité de dents de verrouillage (36) et une pluralité d'entredents (37) agencés entre les dents de verrouillage (36) ou une configuration de trous (23) avec une pluralité d'évidements (24), une pluralité d'entretoises intermédiaires (24) séparant les évidements et une entretoise de liaison (26) reliant les entretoises intermédiaires (24).

5. Dispositif de réglage selon la revendication 4, dans lequel les longueurs des évidements (24) de la configuration de trous (23) respective dans la direction longitudinale (x) sont supérieures aux longueurs des dents de verrouillage (36) associées de la denture (35) respective.

6. Dispositif de réglage selon la revendication 4 ou 5, dans lequel la configuration de trous (23) est réalisée respectivement sous la forme d'une section d'enserrement qui enserre ou s'engage derrière une section opposée avec la denture (35) associée, normalement à distance dans une direction perpendiculaire à la direction longitudinale (x).

7. Dispositif de réglage selon la revendication 6, dans lequel la configuration de trous (23) est réalisée respectivement à l'extrémité avant de branches latérales (22), qui sont formées des deux côtés et en correspondance avec un profil de branches de liaison (31, 33) du rail inférieur (3) associé.

8. Dispositif de réglage selon la revendication 7, dans lequel les branches latérales (22) sont reliées au deuxième rail (5) par une plaque de liaison (20).

9. Dispositif de réglage selon l'une quelconque des revendications précédentes, dans lequel les premières formations de verrouillage (24a, 25a ; 24b, 25b) ou les deuxièmes formations de verrouillage (36, 37) sont réalisées respectivement sur les deux côtés d'une zone d'enserrement (34) du rail inférieur (3) avec le rail supérieur (5) associé.

10. Dispositif de réglage selon l'une quelconque des revendications précédentes, dans lequel le verrouillage supplémentaire (107) est relié à un adaptateur de ceinture (2) d'un système de ceinture de sécurité, les premières formations de verrouillage (24, 25) étant reliées à l'adaptateur de ceinture (2) et, en cas de collision, la liaison par complémentarité de formes des premières et deuxièmes formations de verrouillage (24, 25 ; 36, 37) du verrouillage supplémentaire étant provoquée l'une avec l'autre après l'application d'une force dans le système de ceinture de sécurité.

11. Siège de véhicule, en particulier siège de véhicule automobile, comportant au moins un dispositif de réglage (103) pour le réglage longitudinal du siège de véhicule selon l'une quelconque des revendications précédentes.

12. Verrouillage supplémentaire (107) pour un dispositif de réglage (103) pour le réglage longitudinal d'un siège de véhicule dans une direction longitudinale (x) ; comprenant
une pluralité de formations de verrouillage (24, 25 ; 36, 37) qui sont agencées à des distances régulières (a) les unes des autres dans la direction longitudinale (x) et qui sont formées sur deux branches latérales opposées (22a, 22b) qui s'étendent dans la direction longitudinale (x),
**caractérisé en ce que**
les formations de verrouillage (24, 25 ; 36, 37) sont agencées sur les deux côtés opposés l'un à l'autre de manière décalée dans la direction longitudinale (x).
